# EUROPÄISCHE PATENTSCHRIFT

(11) **EP 3 460 411 B1**
(45) Veröffentlichungstag und Bekanntmachung des Hinweises auf die Patenterteilung: **20.11.2019**
(21) Anmeldenummer: 18195461.1
(22) Anmeldetag: 19.09.2018
(51) Int. Cl.: G01D 5/244, G01D 3/036

(54) **MAGNETEMPFINDLICHE SENSOREINHEIT UND DEREN VERWENDUNG**
MAGNET SENSITIVE SENSOR UNIT AND ITS USE
UNITÉ DE DÉTECTION MAGNÉTOSENSIBLE ET SON UTILISATION

(30) Priorität: 20.09.2017 DE 102017121789
(43) Veröffentlichungstag der Anmeldung: 27.03.2019
(73) Patentinhaber: Bernstein AG, 32457 Porta Westfalica (DE); Schunk GmbH & Co. KG Spann- und Greiftechnik, 74348 Lauffen an Neckar (DE)
(72) Erfinder: Flaxmeyer, Florian, 74074 Heilbronn (DE); Fellhauer, Bruno, 74336 Brackenheim (DE); Zwirkowski, Georg, 31675 Bückeburg (DE); Stomberg, Michael, 32423 Minden (DE); Pollock, Manuel, 49479 Ibbenbüren (DE)
(74) Vertreter: Gramm, Lins & Partner Patent- und Rechtsanwälte PartGmbB

(56) Entgegenhaltungen:
- EP-A1- 1 505 371
- EP-A2- 2 159 546
- WO-A1-2016/117430
- DE-B3-102013 101 117
- US-A1- 2014 132 254

## Beschreibung

Die Erfindung betrifft eine magnetfeldempfindliche Sensoreinheit, die zum Zusammenwirken mit wenigstens einem relativ zur Sensoreinheit beweglichen Permanentmagneten eingerichtet ist, wobei die Sensoreinheit wenigstens ein magnetfeldempfindliches Sensorelement, wenigstens einen Rechner, wenigstens einen Parameterspeicher zur Speicherung von Einstellparametern der Sensoreinheit und wenigstens eine Ausgangsschnittstelle aufweist, wobei der Rechner dazu eingerichtet ist, von dem Sensorelement aufgrund des Magnetfelds des Permanentmagneten erfasste Magnetfeld-Daten einzulesen und unter Berücksichtigung von Einstellparametern des Parameterspeichers zu Ausgangsdaten zu verarbeiten und die Ausgangsdaten über die Ausgangsschnittstelle auszugeben. Die Erfindung betrifft außerdem eine Verwendung einer solchen Sensoreinheit.

Magnetfeldempfindliche Sensoreinheiten der eingangs genannten Art sind beispielsweise aus der DE 10 2013 101 117 B3 bekannt. Solche Sensoreinheiten werden für unterschiedliche Sensierungsaufgaben an beweglichen Objekten eingesetzt, z.B. für die Positionssensierung an hydraulischen und pneumatischen Stellzylindern. Die durch die Sensoreinheit sensierte Größe wird dabei aufgrund der von dem wenigstens einen Sensorelement der Sensoreinheit erfassten Magnetfeldstärke von dem der Sensoreinheit zugeordneten Permanentmagneten, der auch als Gebermagnet bezeichnet wird, bestimmt. Es wurde festgestellt, dass trotz genauer Kalibrierung eines solchen Sensorsystems Beeinträchtigungen der Erfassungsgenauigkeit auftreten können.

Aus der EP 2 159 546 A2 ist ein Messverfahren zur berührungslosen Erfassung linearer Relativbewegungen zwischen einer Sensorenanordnung und einem Permanentmagneten bekannt. Aus der US 2014/0132254 A1 ist eine Hall Effekt-Messanordnung mit Temperaturkompensation bekannt. Aus der DE 296 23 568 U1 ist ein schlauer linearer Winkelpositionsgeber bekannt. Aus der WO 2016/117430 A1 ist ein Winkelsensor bekannt. Aus der DE 28 40 652 A1 ist ein Beschleunigungsmesser bekannt. Aus der DE 20 2008 002 844 U1 ist ein programmierbarer Positionssensor bekannt.

Der Erfindung liegt die Aufgabe zugrunde, die Erfassungsgenauigkeit eines solchen Systems aus einer magnetfeldempfindlichen Sensoreinheit und wenigstens einem der Sensoreinheit zugeordneten Permanentmagneten zu verbessern.

Diese Aufgabe wird mit einer magnetfeldempfindlichen Sensoreinheit gemäß Anspruch 1 gelöst. Dies beinhaltet, dass die Sensoreinheit wenigstens einen Temperatursensor zur Temperaturerfassung aufweist und im Parameterspeicher Magnetfeld-Temperaturkompensationsdaten gespeichert sind, wobei der Rechner dazu eingerichtet ist, die vom Sensorelement eingelesenen Magnetfeld-Daten unter Berücksichtigung der vom Temperatursensor erfassten Temperatur und der Magnetfeld-Temperaturkompensationsdaten derart zu den Ausgangsdaten zu verarbeiten, dass temperaturbedingte Veränderungen des Magnetfelds des Permanentmagneten in den Ausgangsdaten zumindest im Wesentlichen kompensiert sind. Es wurde erkannt, dass die verwendeten Permanentmagneten hinsichtlich ihrer spezifischen Magnetfeldstärke eine nicht zu vernachlässigende Temperaturabhängigkeit aufweisen. Bei solchen Permanentmagneten ist es zwar bekannt, dass diese bei extrem hohen Temperaturen irreversibel ihre permanentmagnetischen Eigenschaften verlieren, weil die makroskopische Orientierung der Weiss-Bezirke dann verschwindet. Der normale Einsatzbereich solcher Sensorsysteme mit Permanentmagneten liegt jedoch in der Praxis deutlich unterhalb solcher Temperaturen. Im industriellen Umfeld kann z.B. eine Temperatur von 80° C auftreten. Es wurde festgestellt, dass ein Permanentmagnet in diesem Temperaturbereich bei Erwärmung in reversibler Weise die Magnetfeldstärke reduziert, d.h. bei späterer Abkühlung wird die ursprüngliche Magnetfeldstärke im Wesentlichen wieder hergestellt. Messungen haben ergeben, dass ein typischerweise eingesetzter Permanentmagnet ca. 6 % der Magnetfeldstärke bei 80° C gegenüber seiner Magnetfeldstärke bei Raumtemperatur verliert. Diese reversible Varianz der Magnetfeldstärke abhängig von der Temperatur kann bei der erfindungsgemäßen Sensoreinheit nunmehr durch die Erfassung der tatsächlichen Temperatur und die Durchführung einer Temperaturkompensation der Ausgangsdaten durch im Parameterspeicher gespeicherte Magnetfeld-Temperaturkompensationsdaten durchgeführt werden. Im Ergebnis können bei der erfindungsgemäßen Sensoreinheit somit Ausgangsdaten bereitgestellt werden, bei denen der Temperatureinfluss auf die Magnetfeldstärke des Permanentmagneten im Wesentlichen eliminiert ist. Hierdurch kann eine wesentlich höhere Messgenauigkeit des Systems aus magnetfeldempfindlicher Sensoreinheit und Permanentmagneten erreicht werden.

Die Magnetfeld-Temperaturkompensationsdaten können beispielsweise in Form eines Datensatzes mit mehreren Kompensationsdaten für unterschiedliche Temperaturen oder als über einem bestimmten Temperaturbereich verlaufende Kompensationskurze ausgebildet sein. Werden nur einzelne Kompensationsdaten gespeichert, kann bei Temperaturen, die zwischen diesen Kompensationsdaten-Punkten liegen, eine rechnerische Interpolation zur Durchführung der Temperaturkompensation der tatsächlich erfassten Temperatur durchgeführt werden.

Die Magnetfeld-Temperaturkompensationsdaten können beispielsweise als Wertepaare Temperatur/Kompensationsfaktor ausgebildet sein und für eine Mehrzahl von Temperaturen oder durchgehend für einen bestimmten Temperaturbereich als Kompensationskurve im Parameterspeicher gespeichert sein. Für die Durchführung der Temperaturkompensation bestimmt der Rechner dann anhand der durch den Temperatursensor tatsächlich erfassten Temperatur den entsprechenden Magnetfeld-Temperaturkompensationswert, d.h. in diesem Fall einen der tatsächlichen Temperatur zugeordneten Kompensationsfaktor, und führt die Temperaturkompensation beispielsweise durch Multiplikation der vom Sensorelement aktuell eingelesenen Magnetfeld-Daten mit dem Kompensationsfaktor durch.

Alternativ oder zusätzlich zu einem Kompensationsfaktor können die Magnetfeld-Temperaturkompensationsdaten auch einen Kompensations-Offset aufweisen, der zu den aktuell eingelesenen Magnetfeld-Daten des Sensorelements addiert wird. Das wenigstens eine magnetfeldempfindliche Sensorelement der Sensoreinheit kann vorteilhafterweise bereits als temperaturkompensiertes Sensorelement ausgebildet sein, d.h. als Sensorelement, das bereits über eine interne Temperaturkompensation verfügt. Das Sensorelement kann z.B. ein Hallsensor oder ein magnetoresistiver Sensor sein.

Die einzelnen Komponenten der Sensoreinheit, d.h. das wenigstens eine magnetfeldempfindliche Sensorelement, der wenigstens eine Rechner, der wenigstens eine Parameterspeicher, die wenigstens eine Ausgangsschnittstelle und der wenigstens eine Temperatursensor, können dabei in einer Baueinheit zusammengefasst sein, d.h. als eine integrierte Baueinheit ausgebildet sein. Dies kann z.B. dadurch realisiert sein, dass die Sensoreinheit ein Gehäuse aufweist, in dem die genannten Komponenten angeordnet sind.

Gemäß der Erfindung ist vorgesehen, dass im Parameterspeicher mehrere Datensätze der Magnetfeld-Temperaturkompensationsdaten für eine Vielzahl unterschiedlicher Permanentmagneten und/oder Permanentmagnet-Typen speicherbar ist und vom Anwender programmierbar ist, welcher dieser Datensätze vom Rechner für die Bestimmung der Ausgangsdaten eingesetzt werden soll. Somit können für bestimmte konkrete Permanentmagneten, die in Kombination mit der Sensoreinheit genutzt werden, jeweils zugeordnete Magnetfeld-Temperaturkompensationsdaten im Parameterspeicher abgespeichert werden. Alternativ oder zusätzlich können auch für bestimmte vordefinierte Permanentmagnet-Typen die entsprechenden typenspezifischen Magnetfeld-Temperaturkompensationsdaten im Parameterspeicher abgespeichert werden. Vom Anwender kann dann durch Einstellen eines bestimmten Auswahlparameters festgelegt werden, welcher dieser Datensätze im konkreten Anwendungsfall in der Sensoreinheit genutzt werden soll. Die diversen Datensätze der Magnetfeld-Temperaturkompensationsdaten können dabei bereits herstellerseitig vom Hersteller der Sensoreinheit eingespeichert werden, so dass der Anwender auf einfache Weise, nämlich durch Auswahl eines dieser Datensätze, die gewünschte Temperaturkompensation realisieren kann. Der Anwender ist damit davon befreit, selbst die geeigneten Magnetfeld-Temperaturkompensationsdaten für seinen Anwendungsfall zu bestimmen. Auf diese Weise kann die Sensoreinheit besonders anwenderfreundlich gestaltet werden.

Gemäß einer vorteilhaften Weiterbildung der Erfindung ist vorgesehen, dass in dem Parameterspeicher Speicherplätze für die Speicherung mehrerer frei programmierbarer, unabhängiger Schaltpunkte vorhanden sind und der Rechner dazu eingerichtet ist, anhand der programmierten Schaltpunkte aus den Magnetfeld-Daten des Sensorelements ein Ausgangssignal in Form eines Schaltsignals zu erzeugen, das das Erreichen zumindest eines der Schaltpunkte durch die Magnetfeld-Daten signalisiert. Die im Parameterspeicher zur speichernden Schaltpunkte stellen somit Triggerpunkte dar, bei denen der Rechner aus einem zunächst kontinuierlich bestimmten Signal ein Schaltsignal erzeugt, d.h. ein Ein-/Aus-Signal. Auf diese Weise kann die Sensoreinheit direkt zum Auslösen bestimmter Schaltvorgänge in Abhängigkeit von durch den Permanentmagneten erfassten äußeren Größen genutzt werden.

Gemäß einer vorteilhaften Weiterbildung der Erfindung ist vorgesehen, dass die Sensoreinheit Befestigungselemente zur Befestigung an C- und T-Profilnuten eines Stellzylinders aufweist. Dies hat den Vorteil, dass die Sensoreinheit in besonders einfacher und anwenderfreundlicher Weise für die Positionssensierung an Stellzylindern, wie sie in der Produktionstechnik eingesetzt werden, befestigt werden kann.

Gemäß einer vorteilhaften Weiterbildung der Erfindung ist vorgesehen, dass die Sensoreinheit wenigstens zwei voneinander beabstandet angeordnete magnetfeldempfindliches Sensorelemente aufweist, wobei der Rechner dazu eingerichtet ist, von den Sensorelementen aufgrund des Magnetfelds des Permanentmagneten erfasste Magnetfeld-Daten einzulesen und unter Berücksichtigung von Einstellparametern des Parameterspeichers und unter Berücksichtigung der vom Temperatursensor erfassten Temperatur und der Magnetfeld-Temperaturkompensationsdaten derart zu den Ausgangsdaten zu verarbeiten, dass temperaturbedingte Veränderungen des Magnetfelds des Permanentmagneten in den Ausgangsdaten zumindest im Wesentlichen kompensiert sind, und die Ausgangsdaten über die Ausgangsschnittstelle auszugeben. Auf diese Weise kann die Messgenauigkeit der Sensoreinheit weiter erhöht werden. Insbesondere bei Anwendung zur Positionserfassung von beweglichen Teilen von Stellzylindern kann im Wesentlichen über den gesamten Stellbereich des Stellzylinders eine Positionserfassung mit hoher Präzision durchgeführt werden.

Vorteilhafte Einsatzgebiete einer solchen Sensoreinheit sind die magnetische Wegsensierung, die magnetische Positionssensierung, die magnetische Winkelsensierung und/oder die magnetische Drehzahlerfassung. Hierbei ist die Sensoreinheit in der Regel an einem Bauteil befestigt, das stationär angeordnet ist oder nur im geringen Umfang beweglich ist. Der der Sensoreinheit zugeordnete Permanentmagnet kann dabei an einem Bauteil befestigt sein, das Bewegungen im beliebigen Umfang durchführt.

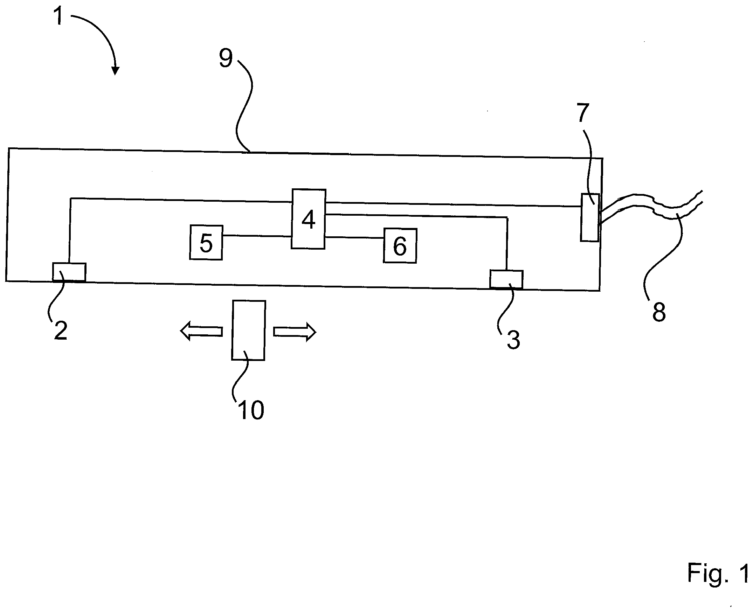

Die Erfindung wird nachfolgend anhand eines Ausführungsbeispiels unter Verwendung einer Zeichnung näher erläutert. Die Zeichnung Fig. 1 zeigt eine magnetfeldempfindliche Sensoreinheit 1 sowie einen der Sensoreinheit 1 zugeordneten Permanentmagneten 10. Es sei angenommen, dass der Permanentmagnet 10 entsprechend den durch die Pfeile dargestellten Richtungen beweglich gegenüber der Sensoreinheit 1 ist, z.B. indem der Permanentmagnet 10 an einem Kolben oder einer Kolbenstange eines Stellzylinders befestigt ist und die Sensoreinheit 1 ortsfest am Stellzylinder befestigt ist.

Die Sensoreinheit 1 weist ein Gehäuse 9 auf. Im Gehäuse 9 sind zwei magnetfeldempfindliche Sensorelemente 2, 3 angeordnet. Ferner sind im Gehäuse 9 ein Rechner 4, z.B. ein Mikrocontroller oder ein Mikroprozessor, ein Parameterspeicher 5 und ein Temperatursensor 6 angeordnet. Der Temperatursensor 6 kann z.B. als temperaturempfindlicher Widerstand (NTC), als temperaturempfindliche Diode oder sonstiges temperaturempfindliches elektronisches Bauelement ausgebildet sein. Ferner weist die Sensoreinheit 1 eine Ausgangsschnittstelle 7 auf, die z.B. eine elektrische Steckverbindung aufweisen kann. An die Ausgangsschnittstelle 7 ist ein Anschlusskabel 8 angeschlossen.

Der Rechner 4 führt ein Computerprogramm aus. Auf diese Weise werden durch den Rechner 4 fortlaufend Magnetfeld-Daten der Sensorelemente 2, 3 eingelesen, außerdem Temperatur-Daten vom Temperatursensor 6. Der Rechner bestimmt aufgrund der Magnetfeld-Daten und der Temperatur-Daten unter Berücksichtigung von aus dem Parameterspeicher 5 ausgelesenen Magnetfeld-Temperaturkompensationsdaten Ausgangsdaten und gibt diese Ausgangsdaten über die Ausgangsschnittstelle 7 aus. Die Ausgangsdaten können auf diese Weise über das Anschlusskabel 8 anderen angeschlossenen Komponenten zugänglich gemacht werden, z.B. um abhängig von der Position des Permanentmagneten 10 bestimmte Schaltvorgänge auszuführen.

Die Sensoreinheit 1 kann auch zur drahtlosen Übermittlung der Ausgangsdaten eingerichtet sein. In diesem Fall weist die Ausgangsschnittstelle 7 eine Drahtlos-Datenkommunikationseinheit auf. In solchen Fällen kann die Sensoreinheit 1 dennoch mit einer Anschlussleitung gekoppelt sein, um auf diese Weise die elektrische Stromversorgung sicherzustellen. Alternativ oder zusätzlich kann die Sensoreinheit 1 auch mit einer eigenen Stromversorgung ausgebildet sein, z.B. einem Akkumulator oder einer Batterie.

## Patentansprüche

1. Magnetfeldempfindliche Sensoreinheit (1), die zum Zusammenwirken mit wenigstens einem relativ zur Sensoreinheit beweglichen Permanentmagneten (10) eingerichtet ist, wobei die Sensoreinheit (1) wenigstens ein magnetfeldempfindliches Sensorelement (2, 3), wenigstens einen Rechner (4), wenigstens einen Parameterspeicher (5) zur Speicherung von Einstellparametern der Sensoreinheit (1) und wenigstens eine Ausgangsschnittstelle (7) aufweist, wobei der Rechner (4) dazu eingerichtet ist, von dem Sensorelement (2, 3) aufgrund des Magnetfelds des Permanentmagneten (10) erfasste Magnetfeld-Daten einzulesen und unter Berücksichtigung von Einstellparametern des Parameterspeichers (4) zu Ausgangsdaten zu verarbeiten und die Ausgangsdaten über die Ausgangsschnittstelle (7) auszugeben, wobei die Sensoreinheit (1) wenigstens einen Temperatursensor (6) zur Temperaturerfassung aufweist und im Parameterspeicher (5) Magnetfeld-Temperaturkompensationsdaten gespeichert sind, wobei der Rechner (4) dazu eingerichtet ist, die vom Sensorelement (2, 3) eingelesenen Magnetfeld-Daten unter Berücksichtigung der vom Temperatursensor (6) erfassten Temperatur und der Magnetfeld-Temperaturkompensationsdaten derart zu den Ausgangsdaten zu verarbeiten, dass temperaturbedingte Veränderungen des Magnetfelds des Permanentmagneten (10) in den Ausgangsdaten zumindest im Wesentlichen kompensiert sind, **dadurch gekennzeichnet, dass** im Parameterspeicher (5) mehrere Datensätze der Magnetfeld-Temperaturkompensationsdaten für eine Vielzahl unterschiedlicher Permanentmagneten (10) und/oder Permanentmagnet-Typen speicherbar ist und vom Anwender programmierbar ist, welcher dieser Datensätze vom Rechner (4) für die Bestimmung der Ausgangsdaten eingesetzt werden soll.

2. Sensoreinheit nach einem der vorhergehenden Ansprüche, **dadurch gekennzeichnet, dass** in dem Parameterspeicher (5) Speicherplätze für die Speicherung mehrerer frei programmierbarer, unabhängiger Schaltpunkte vorhanden sind und der Rechner (4) dazu eingerichtet ist, anhand der programmierten Schaltpunkte aus den Magnetfeld-Daten des Sensorelements (2, 3) ein Ausgangssignal in Form eines Schaltsignals zu erzeugen, das das Erreichen zumindest eines der Schaltpunkte durch die Magnetfeld-Daten signalisiert.

3. Sensoreinheit nach einem der vorhergehenden Ansprüche, **dadurch gekennzeichnet, dass** die Sensoreinheit (1) Befestigungselemente zur Befestigung an C- und T-Profilnuten eines Stellzylinders aufweist.

4. Sensoreinheit nach einem der vorhergehenden Ansprüche, **dadurch gekennzeichnet, dass** die Sensoreinheit (1) wenigstens zwei voneinander beabstandet angeordnete magnetfeldempfindliches Sensorelemente (2, 3) aufweist, wobei der Rechner (4) dazu eingerichtet ist, von den Sensorelementen (2, 3) aufgrund des Magnetfelds des Permanentmagneten (10) erfasste Magnetfeld-Daten einzulesen und unter Berücksichtigung von Einstellparametern des Parameterspeichers (5) und unter Berücksichtigung der vom Temperatursensor (6) erfassten Temperatur und der Magnetfeld-Temperaturkompensationsdaten derart zu den Ausgangsdaten zu verarbeiten, dass temperaturbedingte Veränderungen des Magnetfelds des Permanentmagneten (10) in den Ausgangsdaten zumindest im Wesentlichen kompensiert sind, und die Ausgangsdaten über die Ausgangsschnittstelle (7) auszugeben.

5. Verwendung einer Sensoreinheit (1) nach einem der vorhergehenden Ansprüche für die magnetische Wegsensierung, Positionssensierung, Winkelsensierung und/oder Drehzahlerfassung.

## Claims

1. Sensor unit (1) which is sensitive to magnetic fields and is set up to cooperate with at least one permanent magnet (10) which is movable relative to the sensor unit, the sensor unit (1) having at least one sensor element (2, 3) which is sensitive to magnetic fields, at least one computer (4), at least one parameter memory (5) for storing setting parameters of the sensor unit (1) and at least one output interface (7), the computer (4) being set up for reading in magnetic field data detected by the sensor element (2, 3) on the basis of the magnetic field of the permanent magnet (10) and, taking into account setting parameters of the parameter memory (4), for processing them into output data and for outputting the output data via the output interface (7), the sensor unit (1) having at least one temperature sensor (6) for temperature detection and magnetic field temperature compensation data being stored in the parameter memory (5), the computer (4) being set up for processing the magnetic field data read in by the sensor element (2, 3) into the output data, taking into account the temperature detected by the temperature sensor (6) and the magnetic field temperature compensation data, in such a way that temperature-induced changes in the magnetic field of the permanent magnet (10) are at least substantially compensated in the output data, **characterized in that** a plurality of data sets of the magnetic field temperature compensation data for a multiplicity of different permanent magnets (10) and/or permanent magnet types can be stored in the parameter memory (5) and the user can program which of these data sets is to be used by the computer (4) for determining the output data.

2. Sensor unit according to one of the preceding claims, **characterized in that** memory locations for storing a plurality of freely programmable, independent switching points are present in the parameter memory (5) and the computer (4) is set up for generating an output signal in the form of a switching signal from the magnetic field data of the sensor element (2, 3) on the basis of the programmed switching points, which output signal signals that at least one of the switching points has been reached by the magnetic field data.

3. Sensor unit according to one of the preceding claims, **characterized in that** the sensor unit (1) has fastening elements for fastening to C and T profile grooves of a positioning cylinder.

4. Sensor unit in accordance with one of the preceding claims, **characterized in that** the sensor unit (1) has at least two magnetic-field-sensitive sensor elements (2, 3) arranged at a distance from one another, the computer (4) being set up for reading in magnetic-field-data detected by the sensor elements (2, 3) on the basis of the magnetic-field of the permanent magnet (10) and, taking into account setting parameters of the parameter memory (5) and taking into account the temperature detected by the temperature sensor (6) and the magnetic field temperature compensation data, for processing them into the output data in such a way that temperature-induced changes in the magnetic field of the permanent magnet (10) are at least substantially compensated in the output data, and to output the output data via the output interface (7).

5. Use of a sensor unit (1) in accordance with one of the preceding claims for magnetic displacement sensing, position sensing, angle sensing and/or rotational speed detection.

## Revendications

1. Unité de détection (1) sensible au champ magnétique qui est conçue pour coopérer avec au moins un aimant permanent (10) mobile par rapport à l'unité de détection,
l'unité de détection (1) comportant au moins un élément de détection (2, 3) sensible au champ magnétique, au moins un ordinateur (4), au moins une mémoire de paramètres (5) destinée à mémoriser des paramètres de réglage de l'unité de détection (1) et au moins une interface de sortie (7),
l'ordinateur (4) étant configuré pour lire des données de champ magnétique acquises par l'élément de détection (2, 3) sur la base du champ magnétique de l'aimant permanent (10) et pour les traiter sous forme de données de sortie en tenant compte des paramètres de réglage de la mémoire de paramètres (4) et pour traiter les données de sortie par le biais de l'interface de sortie (7),
l'unité de détection (1) comportant au moins un capteur de température (6) destiné à détecter la température, et des données de compensation de température de champ magnétique étant mémorisées dans la mémoire de paramètres (5),
l'ordinateur (4) étant configuré pour traiter les données de champ magnétique, lues par l'élément de détection (2, 3), sous forme de données de sortie en prenant en compte la température détectée par le capteur de température (6) et les données de compensation de température de champ magnétique de sorte que des variations du champ magnétique de l'aimant permanent (10), qui sont induites par la température, soient compensées au moins sensiblement dans les données de sortie, **caractérisée en ce qu'**une pluralité d'ensembles de données de compensation de température de champ magnétique pour une pluralité d'aimants permanents (10) différents et/ou de types d'aimants permanents différents peuvent être mémorisés dans la mémoire de paramètres (5) et peuvent être programmés par l'utilisateur qui utilisera ces ensembles de données par le biais de l'ordinateur (4) pour déterminer les données de sortie.

2. Unité de détection selon l'une des revendications précédentes, **caractérisée en ce que** des emplacements de mémoire destinés à la mémorisation d'une pluralité de points de commutation indépendants et programmables sont présents dans la mémoire de paramètres (5) et l'ordinateur (4) est configuré pour générer sur la base des points de commutation programmés à partir des données de champ magnétique de l'élément de détection (2, 3) un signal de sortie sous la forme d'un signal de commutation qui signale qu'au moins un des points de commutation a été atteint par les données de champ magnétique.

3. Unité de détection selon l'une des revendications précédentes, **caractérisée en ce que** l'unité de détection (1) comporte des éléments de fixation destinés à être fixés à des gorges de profilé en C et en T d'un cylindre de réglage.

4. Unité de détection selon l'une des revendications précédentes, **caractérisée en ce que** l'unité de détection (1) comporte au moins deux éléments de détection (2, 3) sensibles au champ magnétique qui sont espacés l'un de l'autre,
l'ordinateur (4) étant configuré pour lire des données de champ magnétique détectées par les éléments de détection (2, 3) sur la base du champ magnétique de l'aimant permanent (10) et pour les traiter sous la forme de données de sortie en tenant compte des paramètres de réglage de la mémoire de paramètres (5) et en tenant compte de la température détectée par le capteur de température (6) et des données de compensation de température de champ magnétique, de telle sorte que des variations du champ magnétique de l'aimant permanent (10), qui sont induites par la température, soient compensées au moins sensiblement dans les données de sortie, et pour délivrer les données de sortie par le biais de l'interface de sortie (7) .

5. Utilisation d'une unité de détection (1) selon l'une des revendications précédentes pour la mesure de chemin, la mesure de position, la mesure d'angle et/ou la détection de vitesse de rotation par voie magnétique.
